# EUROPÄISCHE PATENTSCHRIFT

(11) **EP 1 215 090 B1**
(45) Veröffentlichungstag und Bekanntmachung des Hinweises auf die Patenterteilung: **01.03.2006**
(21) Anmeldenummer: 01128796.8
(22) Anmeldetag: 04.12.2001
(51) Int. Cl.: B60R 21/01

(54) **Schaltungsanordnung zur Ansteuerung einer Insassenschutzvorrichtung**
Circuit for controlling a passenger protection device
Circuit pour commander un dispositif de protection des occupants

(30) Priorität: 15.12.2000 DE 10062756
(43) Veröffentlichungstag der Anmeldung: 19.06.2002
(73) Patentinhaber: Conti Temic microelectronic GmbH, 90411 Nürnberg (DE); Island Pyrochemical Industries Corp., NY 11501-2134 (US)
(72) Erfinder: Härle, Thomas, 87616 Marktoberdorf (DE); Florian, Johann, 86529 Schrobenhausen (DE); Roth, Gerhard, 90584 Allersberg (DE); Wetzel, Guido, 86633 Neuburg/Donau (DE); Parizat, Amnon, 11 501 2134 Mineola, New York (US)

(56) Entgegenhaltungen:
- EP-A- 0 283 188
- EP-A- 0 965 501
- WO-A-98/33684
- DE-A- 4 012 386
- US-A- 3 871 472
- US-A- 4 222 030
- US-A- 5 284 330

## Beschreibung

Die Erfindung betrifft eine Schaltungsanordnung zur Ansteuerung eines durch ein magnetisches Feld im Zündungsverlauf beeinflussbaren Gasgenerators einer Insassenschutzvorrichtung, insbesondere eines Airbags.

Gasgeneratoren für Airbags mit durch ein magnetisches Feld steuerbarem Zündungsverlauf sind beispielsweise aus der WO 98/33684 , die als nächstliegender Stand der Technik betrachtet wird, bekannt, bei der mittels des magnetischen Feldes die Viskosität einer Dämpfungslösung beeinflusst wird, welche die Bewegung eines nach einer Inertialzündung vom -Druck in der Brennkammer bewegten Kolbens beeinflußt, der zudem die Zufuhr weiteren flüssigen oder gasförmigen Treibstoffes in die Brennkammer beeinflußt. Der Kolben regelt die Größe der Durchströmöffnung bzw. erzeugt einen auf den Treibstoff wirkenden Druck, welcher die in die Brennkammer strömende Treibstoffmenge und damit den Abbrand des Treibstoffs, also den Zündungsverlauf und damit Aufblasverhalten des Airbags steuert. Das Magnetfeld wird dabei von einer um den Dämpfungszylinder angeordneten Spule erzeugt und soll eine der gewünschten Abbrandgeschwindigkeit entsprechende Stärke aufweisen. Entsprechend in ihrer Viskosität durch ein magnetisches Feld veränderbare magneto-rheologische Dämpfungsflüssigkeiten werden beispielsweise durch die US 5,284,330 vorgestellt. Die Dämpfung verstärkt sich dabei mit zunehmendem Strom und damit zunehmendem Magnetfeld. Hinsichtlich des Aufbaus und der Wirkungsweise eines solchen Gasgenerators wird dabei ergänzend ausdrücklich auf die WO 98/33684 verwiesen.

Darüber hinaus werden in Zukunft auch Treibgase mit direkter Beeinflussbarkeit des Abbrandverhaltens durch die Stärke eines elektrischen Feldes zu berücksichtigen sein. Als Gasgeneratoren mit durch ein magnetisches Feld beeinflussbaren Zündungsverlauf werden als solche alle Gasgeneratoren verstanden, bei denen eine technische Eigenschaft unmittelbar durch die Stärke des magnetischen Feldes verändert wird. Spulen als Energiespeicher oder zur Transformation im Zündstromkreis weisen eine rein elektrische und gerade keine derartige Feldwirkung auf den Gasgenerator auf.

Grundsätzlich sind zur energieeffizienten Versorgung kleinerer Lasten mit einer vorgebbaren Versorgungsspannung bzw. einem Versorgungsstrom beispielsweise aus Tietze/Schenk: Halbleiter-Schaltungstechnik, 10 Auflage, Springer-Verlag 1993, S. 563 - 564 Schaltregler bekannt, bei denen zwischen Ein- und Ausgang ein Schaltmittel und eine Speicherinduktivität geschaltet ist, wobei Strom bzw. Spannung auf der Lastseite erfasst, mit einem Sollwert verglichen und in Abhängigkeit vom Vergleichsergebnis das Schaltmittel pulsweitenmoduliert gesteuert wird. In der geöffneten Schalterstellung wirkt eine zur Versorgungsspannung entgegengesetzt gepolte Freilaufdiode als Freilaufzweig für die Speicherinduktivität.

Aufgabe der Erfindung ist es, eine geeignete Schaltungsanordnung zur Ansteuerung eines solchen Gasgenerators vorzustellen, die eine möglichst exakte Regelung des magnetischen Feldes ermöglicht. Zudem soll eine Auslösung auch bei Wegfall der Versorgungsspannungszufuhr allein aus einem Autarkiekondensator möglich sein

Diese Aufgabe wird durch die Merkmale des Anspruchs 1 gelöst. Die Wirkungsweise der vorgestellten Schaltung basiert auf dem Schaltreglerprinzip, nicht jedoch der Aufbau, da anstelle der sonst bei Schaltreglern zwischen Ein- und Ausganggeschalteten Speicherinduktivität die das magnetische Feld erzeugende Lastspule selbst als Bestandteil des Schaltreglers verwendet wird. Dadurch wird neben einer Einsparung der sonst zusätzlich erforderlichen Speicherinduktivität zusätzlich die Energiespeicherfunktion der Lastspule zur Reduzierung der Verlustleistung und damit des Energiebedarfs eingesetzt, was insbesondere im Autarkiefall die Autarkiezeit verlängert bzw. bei gegebenen Autarkiezeitanforderungen die erforderliche. Größe des Autarkiekondensators gegenüber einer einfachen Anwendung von Schaltreglern deutlich reduziert.

Dabei ist zu berücksichtigen, dass die Ansteuerschaltung und der Gasgenerator üblicherweise baulich voneinander getrennt und von unterschiedlichen Herstellern angeboten werden, dennoch die Lastspule im Gasgenerator funktionaler Bestandteil der Ansteuerschaltung wird.

Schaltregler basieren auf einer pulsweitenmodulierten Steuerung des Schaltmittels und einer damit einhergehenden Freilaufphase der Spule. Es ist eine reine Steuerung des Pulsweitenverhältnisses entsprechend eines vorgegebenen Soll-Stroms ohne Rückkopplung denkbar. Bei Ausbildung als rückgekoppelter Regelkreis wird durch die Schaltung zudem jedoch der Ist-Strom durch die Spule erfasst, mit einem Sollwert verglichen und in Abhängigkeit vom Vergleichsergebnis ein in Serie zur Spule geschaltetes Schaltmittel pulsweitenmoduliert gesteuert.

Zudem ist zwischen Schaltmittel und Spule parallel zur Spule eine Freilaufdiode geschaltet. Über die Schaltfrequenz und die Schaltschwelle kann die Stärke des magnetischen Feldes und die Schwankungsbreite des Stroms exakt vorgegeben werden.

Vorzugsweise kann in Serie zur Freilaufdiode ein überbrückbarer Widerstand zwischengeschaltet werden, über den bei einer gewünschten Reduzierung des Magnetfelds der Spule dieses noch schneller abgebaut werden kann. Dies ist insbesondere dann der Fall, wenn nach Beginn des Unfallverlaufs eine deutliche Beschleunigung des Aufblasens des Airbags gewünscht und deshalb die Viskosität der magneto-rheologischen Dämpfungsflüssigkeit schnell herabgesetzt werden soll. Die Überbrückung hält andererseits bei der Aufladung und Konstanthaltung die Verluste während der Freilaufphase gering, was gerade im Autarkiebetrieb aufgrund der begrenzten Energiereserven zur Auslösung der Insassenschutzeinrichtung besonders vorteilhaft ist.

Alternativ kann eine Rückspeisung der in der Spule gespeicherten Energie in den Autarkiekondensator erfolgen.

Die Erfindung soll nachfolgend anhand von Ausführungsbeispielen und Figuren näher erläutert werden. Kurze Beschreibung der Figuren:
- Figur 1: Schaltungsanordnung zur Ansteuerung eines durch ein magnetisches Feld im Zündungsverlauf beeinflussbaren Gasgenerators einer lnsassenschutzeinrichtung
- Figur 2: Schaltungsanordnung mit Rückspeisung

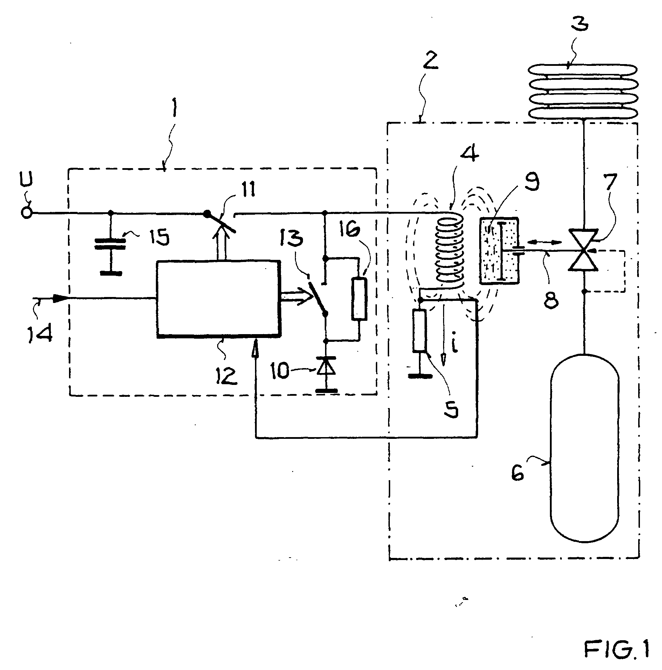

Die Figur 1 zeigt eine Schaltungsanordnung 1 zur Ansteuerung eines Gasgenerators 2 eines Airbags 3.

Die Wirkungsweise dieses Gasgenerators basiert auf einem flüssigen, brennbaren Treibgas 6- und einer steuerbaren Ventilkonstruktion 7, welche auf einen Auslösebefehl und eine Inertialzündung hin das Treibgas in eine Brennkammer strömen läßt, welches dort entzündet wird. Der dabei entstehende Gasdruck wirkt auf die Ventilkonstruktion 7 und führt zum weiteren Öffnen der Ventilkonstruktion 7. Die Ventilkonstruktion 7 ist nur funktional skizzenhaft angedeutet und kann in Form eines beweglichen Kolbens gemäß der einleitend beschriebenen W0 98/33684 ausgestaltet sein, wobei auch alternative Konstruktionen denkbar sind.

Gegen diese Öffnungsbewegung des Ventils 7, also bspw. des Kolbens, wirkt aber ein Dämpfer 8, der in einer magneto-rheologischen Dämpfungslösung 9 bewegt wird, deren Viskosität vom Magnetfeld einer Spule 4 abhängig ist. Durch Eisenpartikel in der magneto-rheologischen Dämpfungslösung 9 erhöht sich mit zunehmendem Magnetfeld die Dämpfung der Ventilbewegung und verlangsamt sich damit den Abrand.

Die mechanischen und pyrotechnischen Komponenten des Gasgenerators 2 sind in der Figur 1 nur skizzenhaft angedeutet, da dies nur ein Beispiel eines möglichen Anwendungsfalls der Schaltungsanordnung ist, Ergänzend wird auf den dazu entsprechend eingangs genannten Stand der Technik verwiesen.

Die Schaltungsanordnung ist darüber hinaus auch für andere durch ein magnetisches Feld im Zündungsverlauf beeinflussbare Gasgeneratoren geeignet, bspw. für Gasgeneratoren mit durch das Magnetfeld direkt beeinflussbare Treibgase.

Die Schaltungsanordnung 1 zur Ansteuerung des Gasgenerators 2 weist eine Versorgungsspannungsquelle U und einen dazu parallelen Autarkiekondensator 1 5 auf, welcher bei Ausfall der Versorgungsspannungsquelle U den Gasgenerator 2 für eine Autarkiezeit versorgt. Zudem ist die Spule 4 zur Erzeugung des elektromagnetischen Feldes im Gasgenerator 2 funktionaler Bestandteil der Schaltung. Mit einem Meßelement 5, hier ausgestaltet als Shuntwiderstand, wird der durch die Spule 4 fliessende Strom i erfasst und in einer Steuerschaltung 12 mit einem Sollwert bzw. einer unteren und oberen Schwelle verglichen und in Abhängigkeit vom Vergleichsergebnis ein in Serie zur Spule 4 angeordneter, zwecks schneller Schaltzeiten üblicherweise mikroelektronisch ausgebildeter Schaltmittel 11 pulsweitenmoduliert gesteuert. Der Aufbau der Steuerschaltung 12 und die Erzeugung des Ansteuersignals für den mikroelektronischen Schaltmittel 11 sind dabei direkt von üblichen Schaltreglern übertragbar. Der Sollwert des Stromes bzw. die entsprechende untere und obere Vergleichsschweile werden dabei über ein Steuersignal 14 entsprechend dem gewünschten Auslöseverhalten vorgegeben, wobei die Steuerschaltung 12 die gewünschte Auslösegeschwindigkeit entsprechend der spezifischen Eigenschaften der magneto-rheologischen Dämpfungslösung 9 in die entsprechenden Schwellwerte umsetzt und daraus dann i Vergleich mit dem Iststrom das PWM-Signal zur Ansteuerung des Schalters 111 erzeugt.

Zwischen Schaltmittel 11 und Spule 4 parallel zur Spule 4 ist eine Freilaufdiode 10 mit zur Versorgungsspannungsquelle U entgegengesetzter Polarität geschaltet, die die Aufrechterhaltung des Stromflusses durch die Spule 4 aus der in der Spule 4 gespeicherten Energie während des geöffneten Schaltzustands des mikroelektronischen Schalters 11 ermöglicht. Dadurch wird der Energieverlust am Schaltmittel 11 deutlich reduziert, wodurch eine Ansteuerung des Gasgenerators 2 auch aus einem verhältnismäßig kleinen Autarkiekondensator 15 von wenigen Mikrofarad bei Ausfall der Versorgungsspannung für eine vorgegebene Autarkiezeit möglich ist.

In der hier gezeigten besonders bevorzugten Ausgestaltung ist zudem ein Widerstand 16 in Serie zur Freilaufdiode 10 angeordnet, der jedoch eine schaltbare Überbrückung 13 aufweist, die hier in Form eines Schalters skizziert wurde. Diese schaltbare Überbrückung 13 ist im Normalbetrieb geschlossen, so dass in der Freilaufphase, also bei geöffnetem Schaltmittel 11, der Spulenstrom i über diese Überbrückung 13 und die Diode 10 fließt. Dieser niederohmige Freilaufstromkreis weist eine äußerst geringe Verlustleistung auf, was für den Normalbetrieb insbesondere auch im Autarkiefall bei Stromversorgung aus dem Autarkiekondensator 15 sehr vorteilhaft ist. Bedingt damit ist jedoch eine relativ langsame Entladung der Spule 4. Auch dies ist für die Konstantregelung des Stroms i vorteilhaft, da so die lmpulsrate zur Ansteuerung des Schalters 11 niedrig gewählt werden kann. Allein durch ein Öffnen des Schalters 11 baut sich jedoch das magnetische Feld der Spule 4 somit auch verhältnismäßig langsam ab. Wird ein Abbrand des Treibstoffes zunächst durch ein starkes Magnetfeld und damit eine hohe Dämpfungswirkung der magneto-rheologischen Dämpfungslösung 9 stark abgebremst, kann sich das Magnetfeld zur späteren Beschleunigung des Abbrands nur langsam abbauen. Zur schnelleren Herabsetzung des magnetischen Felds in der Spule 4, insbesondere zur Beschleunigung des Zündungsverlaufs der Insassenschutzeinrichtung, wird die Überbrückung 13 geöffnet und die Spule 4 über den Widerstand 16 entladen, der gemäß τ=L/R die Entladung beschleunigt. So kann schnell ein anderer Wert des Spulenstroms i eingestellt bzw. dieser auf Null herabgeregelt werden. Die Ansteuerung der Überbrückung 13 erfolgt dabei von der Steuerschaltung 12 in Abhängigkeit von dem Signal 14.

Alternativ dazu kann ein einziger Transistor sogar im Schalterbetrieb zwischen gesperrtem und gesättigtem Zustand den skizzierte Schaltmittel 13 bilden, im Entladebetrieb in den Teildurchlaßbereich gesteuert als Widerstandselement 16 fugieren.

Weiterhin ist denkbar, dass Widerstandselement 16 steuerbar auszubilden, bspw. als ein Transistor, wie bereits vorgehend vorgeschlagen, der zunächst leitend geschaltet wird und nachfolgend über eine Zeitspanne im Teildurchlassbereich in die Sperrung gesteuert wird. Dadurch kann die während der Entladung der Spule 4 dort induzierte Spannung gesteuert und bei entsprechender Erfassung auch geregelt werden.

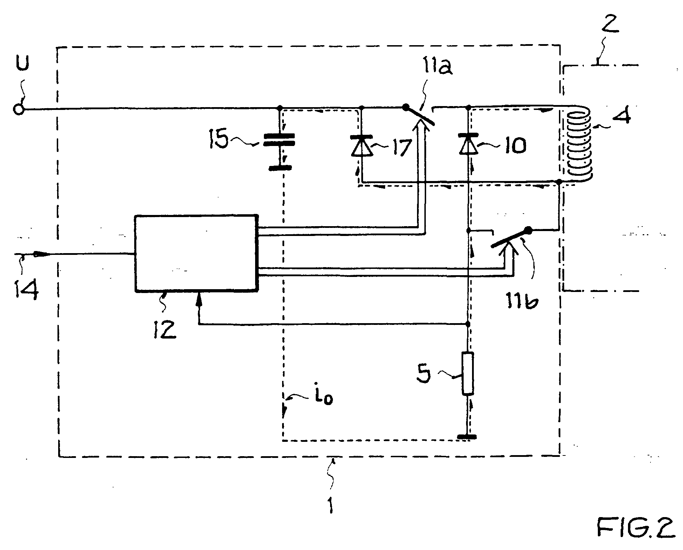

Die Figur 2 zeigt darüber hinaus noch eine alternative Ausgestaltung der Schaltungsanordnung, bei der beidseitig der Spule 4 von der Steuerung 12 über Signale 18a/18b angesteuerte Schaltmittel 11a und 11b vorgesehen sind und-neben der Freilaufdiode 10 (zwischen der Highside der Spule 4 und Masse) eine weitere Diode 17 vorgesehen ist, die ebenfalls entgegengesetzt zur Versorgungsspannung U gepolt ist, die sich jedoch zwischen der Lowside der Spule 4 und dem Autarkiekondensator 15 befindet.

Die schnelle Entladung der Spule 4 erfolgt in dieser Schaltungsanordnung über den gepunktet angedeuteten Entladestrompfad 10 bei geöffneten Schaltmittein 11a und 11b über die Diode 17 zum Autarkiekondensator 15 über Masse durch den Meßwiderstand 5 und die Diode 10. Diese Rückspeisung der in der Spule 4 gespeicherten Energie in den Autarkiekondensator 15 erhöht nochmal den Wirkungsgrad der Schaltungsanordnung und reduziert damit deren Energieaufnahme, was insbesondere bei Ausfall der Versorgungsspannung von besonderer Bedeutung ist. Zudem wirkt der Autarkiekondensator 15 gerade im kritischen Umschaltmoment besondert niederohmig und dämpfend, so dass gegenüber einem festen Widerstand, wie in Fig. 1 dargestellt, eine geringe Spannung an der Spule 4 induziert wird.

Die Schaltung ist durch die beidseitig der Spule 4 befindlichen Schaltmittel 11a und 11b gegen Einfachfehler geschützt. Für die Ansteuerung ergeben sich zwei Alternativen. Zum einen kann im Normalbetrieb das Schaltmittel 11b permanent geschlossen bleiben und nur das Schaltmittel 11a pulsweitenmoduliert gesteuert werden. In der Schaltungsanordnung gemäß Fig. 2 ergibt sich dann während der Freilaufphase bei geöffnetem Schaltmittel 11a der Freilaufstrompfad niederohmig über die Freilaufdiode 10 und den geschlossenen Schaltmittel 11b.

Denkbar wäre auch, die Freilaufdiode 10 direkt auf Masse zu führen, so dass der Freilaufstrompfad dann von der Spule 4 über die Diode 10 zunächst auf Masse, dann über Meßwiderstand 5 und Schaltmittel 11b fließen würde.

Besonders bevorzugt erscheint jedoch, die Schaltmittel 11 a und 11b synchron zu schalten, so dass auch im Normalbetrieb der Freilauf über den Autarkiekondensator 15 erfolgt. Dadurch wird die Entladung der Spule 4 deutlich schneller und damit die Reaktionsgeschwindigkeit der Schaltungsanordnung erhöht, ohne den Wirkungsgrad gegenüber der Variante mit geschlossenem zweiten Schaltmittel 11b merklich herabzusetzen.

## Patentansprüche

1. Schaltungsanordnung (1) zur Ansteuerung eines durch ein magnetisches Feld im Zündungsverlauf beeinflussbaren Gasgenerators (2) einer Insassenschutzvorrichtung (3), bestehend aus:
a) einer Spule (4) zur Erzeugung des elektromagnetischen Feldes,
b) einer Versorgungsspannungsquelle (U) und einem dazu parallelen Autarkiekondensator (1 5), welcher bei Ausfall der Versorgungsspannungsquelle (U) den Gasgenerator (2) für eine Autarkiezeit versorgt,
c) einer Steuerschaltung (12), welche einen in Serie zur Spule (4) geschaltetes Schaltmittel (11) pulsweitenmoduliert steuert,
d) und einer Freilaufdiode (10), welche zwischen Schaltmittel (11) und Spule (4) parallel zur Spule (4) mit zur Versorgungsspannungsquelle (U) entgegengesetzter Polarität geschaltet ist.

2. Schaltungsanordnung nach Anspruch 1, **dadurch gekennzeichnet, daß** in Serie im Freilaufstrompfad ein Lastwiderstand (16) angeordnet ist, der eine schaltbare Überbrückung (13) aufweist.

3. Schaltungsanordnung nach Anspruch 2, **dadurch gekennzeichnet, daß** zum Aufbau sowie zur Konstantregelung des magnetischen Felds in der Spule (4) der Lastwiderstand (16) überbrückt ist (13 zu), zur schnellen Herabsetzung des magnetischen Felds in der Spule (4), insbesondere zur Beschleunigung des Zündungsverläufs der Insassenschutzeinrichtung, die Überbrückung (13) geöffnet und die Spule über den Lastwiderstand (16) entladen wird:

4. Schaltungsanordnung nach Anspruch 1 , **dadurch gekennzeichnet, daß**
a) ein erstes Schaltmittel 11 a zwischen Versorgungsspannungsquelle (U) und Spule (4), ein zweites Schaltmittel (11b) zwischen Spule (4) und Masse geschaltet ist,
b) die Freilaufdiode (10) zwischen dem ersten Schaltmittel (11 a) und der Spule (4) parallel zur Spule (4) mit zur Versorgungsspannungsquelle (U) entgegengesetzter Polarität und
c) eine weitere Diode (17) ebenfalls mit zur Versorgungsspannungsquelle - (U) entgegengesetzter Polarität vorgesehen ist, welche die zum zweiten Schaltmittel (11b) gerichtete Seite der Spule (4) mit dem Autarkiekondensator (15) verbindet, und
d) die Steuerschaltung (12) zwecks Aufladung der Spule (4) zumindest das erste Schaltmittel (11a) pulsweitenmoduliert steuert.

5. Schaltungsanordnung nach Anspruch 4, **dadurch gekennzeichnet, daß** die Entladung der Spule (4) durch Rückspeisung der dort gespeicherten Energie in den Autarkiekondensator (15) erfolgt, indem beide Schaltmittel (11a, 11b) geöffnet werden.

6. Schaltungsanordnung nach einem der vorangehenden Ansprüche, **dadurch gekennzeichnet, dass**
a) ein Meßelement (5, 10) zur Erfassung des durch die Spule (4) fliessenden Stroms (i) vorgesehen ist,
b) die Steuerschaltung (12) den Strom (i) durch die Spule (4) mit einem Sollwert vergleicht und in Abhängigkeit vom Vergleichsergebnis das/die Schaltmittel (11, 11a, 11b) pulsweitenmoduliert steuert und so den Strom (i) auf den Sollwert regelt.

## Claims

1. A switch arrangement (1) for triggering a gas generator (2) for a passenger protection device (3) influenceable by a magnetic field during the ignition procedure, consisting of:
a) A coil (4) for producing the electromagnetic field
b) A supply voltage source (U) and a parallel autarchic capacitor (15) which supplied the gas generator (2) in cases when the supply voltage source (U) fails
c) A control switch (12) which controls a switching device (11) which is connected in series to the coil (4), using pulse-width modulation
d) A free-wheeling diode (10) which is switched between the switching device (11) and the coil (4) in parallel to the coil (4) in the opposite polarity to the supply voltage source (U)

2. A switch arrangement according to claim 1, **characterised in that** a load resistor (16) is arranged in series in the free-wheeling current path, which comprises a switchable bridge (13)

3. A switch arrangement according to claim 2, **characterised in that** in order to develop and to continuously regulate the magnetic field in the coil (4), the load resistor (16) is bridged (see 13) for the rapid reduction in the magnetic field in the coil (4), in particular to accelerate the ignition procedure for the passenger protection device, the bridge (13) is opened and the coil is discharged via the load resistance (16).

4. A switch arrangement according to claim 1, **characterised in that**
a) A first switching device (11a) is switched between the supply voltage source (U) and the coil (4), and a second switching device (11b) is switched between the coil (4) and earth
b) The free-wheeling diode (10) is switched between the first switching device (11a) and the coil (4) with an opposite polarity to the supply voltage source (U), and
c) A further diode (17) is also fitted with an opposite polarity to the supply voltage source (U), which connects the side of the coil (4) facing the second switching device (11b) with the autarchic capacitor (15)
d) The control switch (12) controls at least the first switching device (11a) using pulse width modulation

5. A switch arrangement according to claim 4, **characterised in that** the coil (4) is discharged when the energy stored there is fed back into the autarchic capacitor (15), when both switching devices (11a, 11b) are opened

6. A switch arrangement according to one of the above claims, **characterised in that**
a) A measuring element (5, 10) is fitted in order to record the current (i) flowing through the coil (4)
b) The control switch (12) compares the current (i) through the coil (4) with a preset value, and controls the switching device(s) (11, 11a, 11b) depending on the comparative result, thus regulating the current (i) to the preset value.

## Revendications

1. Ensemble de circuit (1) de pilotage d'un générateur de gaz (2) d'un dispositif de protection d'occupants (3) pouvant être influencé par un champ magnétique dans le processus d'allumage, constitué de :
a) une bobine (4) pour la production du champ magnétique,
b) une source de tension d'alimentation (U) et un condensateur d'autonomie (15) qui lui est parallèle et qui, en cas de panne de la source de tension d'alimentation (U), alimente le générateur de gaz (2) pendant une durée d'autonomie,
c) un circuit de commande (12) qui commande en modulation de largeur d'impulsion un moyen de commutation (11) monté en série avec la bobine (4),
d) et une diode de roue libre (10) qui est montée entre le moyen de commutation (11) et la bobine (4) en parallèle avec la bobine (4) avec une polarité inversée par rapport à la source de tension d'alimentation (U).

2. Ensemble de circuit selon la revendication 1, **caractérisé en ce qu'**une résistance de charge (16) est disposée en série dans le chemin de courant de roue libre et présente un shunt (13) commutable.

3. Ensemble de circuit selon la revendication 2, **caractérisé en ce que**, pour la décomposition ainsi que pour la régulation à une valeur constante du champ magnétique dans la bobine (4), la résistance de charge (16) est shuntée (13 fermé), pour l'abaissement rapide du champ magnétique dans la bobine (4), en particulier pour l'accélération du processus d'allumage de l'équipement de protection d'occupants, le shunt (13) est ouvert et la bobine est déchargée via la résistance de charge (16).

4. Ensemble de circuit selon la revendication 1, **caractérisé en ce que**
a) un premier moyen de commutation (11a) est monté entre la source de tension d'alimentation (U) et la bobine (4), un deuxième moyen de commutation (11b) est monté entre la bobine (4) et la masse,
b) la diode de roue libre (10) est prévue entre le premier moyen de commutation (11a) et la bobine (4), en parallèle avec la bobine (4), avec une polarité inversée par rapport à la source de tension d'alimentation (U) et
c) une autre diode (17) est prévue également avec une polarité inversée par rapport à la source de tension d'alimentation (U) et elle raccorde au condensateur d'autonomie (15) le côté de la bobine (4) dirigé vers le deuxième moyen de commutation (11b), et
d) le circuit de commande (12) commande en modulation de largeur d'impulsion au moins le premier moyen de commutation (11a) en vue de charger la bobine (4).

5. Ensemble de circuit selon la revendication 4, **caractérisé en ce que** la décharge de la bobine (4) s'effectue par alimentation de retour de l'énergie qui y est stockée vers le condensateur d'autonomie 15, en ouvrant les deux moyens de commutation (11a, 11b).

6. Ensemble de circuit selon une des revendications précédentes, **caractérisé en ce que**
a) il est prévu un élément de mesure (5, 10) pour la détection du courant (i) s'écoulant à travers la bobine (4),
b) le circuit de commande (12) compare le courant (i) traversant la bobine (4) à une valeur de consigne et, en fonction du résultat de comparaison, commande en modulation de largeur d'impulsion le/les moyens de commutation (11, 11a, 11b) et règle ainsi le courant (i) à la valeur de consigne.
